# EUROPÄISCHE PATENTSCHRIFT

(11) **EP 0 736 758 B1**
(45) Veröffentlichungstag und Bekanntmachung des Hinweises auf die Patenterteilung: **13.06.2001**
(21) Anmeldenummer: 96104319.7
(22) Anmeldetag: 19.03.1996
(51) Int. Cl.: G01M 9/06, G01L 5/16, G01M 9/04

(54) **Modellträger für Windkanalmodelle**
Model support for wind tunnel models
Porte-modèle pour modèles de soufflerie

(30) Priorität: 07.04.1995 DE 19513083
(43) Veröffentlichungstag der Anmeldung: 09.10.1996
(73) Patentinhaber: EUROPEAN TRANSONIC WINDTUNNEL GmbH, 51147 Köln (DE)
(72) Erfinder: Hefer, Gerhard, Dr., 37085 Göttingen (DE)
(74) Vertreter: Selting, Günther, Dipl.-Ing.

(56) Entgegenhaltungen:
- DE-A- 3 151 669
- DE-A- 3 508 937
- US-A- 3 566 163
- US-A- 4 565 940
- US-A- 4 849 668
- US-A- 4 938 059

## Beschreibung

Die vorliegende Erfindung betrifft einen Modellträger für Windkanalmodelle gemäß dem Oberbegriff des Patentanspruchs 1 oder 2. Ein solcher Modellträger ist aus DE 35 08 937 A1 bekannt.

In Windkanälen, in denen die Modelle von Flugzeugen oder Fahrzeugen auf ihre aerodynamischen Eigenschaften getestet werden, wird das Modell an einem Stiel angebracht, der auf der Abströmseite an dem Modell angreift und dieses in die Strömung hält, ohne die Strömung wesentlich zu verändern. Damit die auf das Modell einwirkenden aerodynamischen Kräfte ermittelt werden können, ist zwischen dem Stiel und dem Modell eine Waage angebracht, die mehrere Freiheitsgrade hat. Auf diese Weise kann u.a. der in Längsrichtung der Strömung wirkende Strömungswiderstand des Modells bestimmt werden oder auch das Nickmoment oder das Giermoment sowie der von der Strömung erzeugte Auftrieb. Die Elemente der Waage unterliegen verschiedenen elastischen Verformungen, die mit den Dehnmeßstreifen ermittelt werden, um daraus elektrische Signale zu erzeugen, die die betreffenden Kräfte oder Momente repräsentieren.

Aufgrund des Umstandes, daß das Windkanalmodell und die Waage ein schwingfähiges Masse-Feder-System darstellen, führt das Windkanalmodell Schwingungen aus, die von der Strömung und/oder dem Modellsupport angeregt werden können. Damit werden sowohl longitudinale Schwingungen als auch Drehschwingungen und Biegeschwingungen erzeugt.

Bei dem bekannten Modellträger aus DE 35 08 937 A1 ist die Waage zur Ermittlung der Kräfte im Innern des Modells angeordnet. An dieser Waage greift der Stiel an, der an einem ortsfest abgestützten Support befestigt ist. Der Modellträger besteht somit aus der Waage, dem Stiel und dem Support, die sämtlich in Reihe angeordnet sind. Der Support kann in Abhängigkeit von den Signalen, die die Bewegung des Modells beschreibende Sensoren liefern, angeregt werden, um zu den auftretenden Schwingungen des Modells Antiresonanzen zu erzeugen und damit eine Schwingungskompensation zu bewirken. Der Support ist eine sehr aufwendige Struktur mit zahlreichen Freiheitsgraden, wobei für jeden Freiheitsgrad ein separater Aktuator erforderlich ist.

Stielwaagen, die an dem Stiel eines Modellträgers für einen Windkanal befestigt werden können, auch solche mit piezoelektrischen Sensoren, sind bekannt aus DE 31 51 669 C3 und US-A-49 38 059.

Der Erfindung liegt die Aufgabe zugrunde, einen Modellträger für Windkanalmodelle zu schaffen, der durch eine neue Gestaltung des Gegenschwingungserzeugers kleinformatig und kompakt ausgebildet werden kann.

Die Lösung dieser Aufgabe erfolgt erfindungsgemäß mit den im Patentanspruch 1 angegebenen Merkmalen.

Bei dem erfindungsgemäßen Modellträger hat der Gegenschwingungserzeuger mehrere parallele krafterzeugende Elemente, die nach Art eines ringförmigen Käfigs angeordnet sind. Diese krafterzeugenden Elemente sind piezoelektrische Aktuatoren. Durch geeignete Erregung bestimmter Kombinationen von Aktuatoren können bei stillstehendem Windkanalmodell unterschiedliche Schwingungen erzeugt werden, beispielsweise lineare Schwingungen des Modells in Längsrichtung, Drehschwingungen um die querlaufende horizontale Nickachse oder Drehschwingungen um die querlaufende vertikale Gierachse, oder auch Kombinationen dieser Schwingungen. Es ist eine Regeleinrichtung vorgesehen, die die gelieferten Signale empfängt und daraus Erregersignale für den Gegenschwingungserzeuger produziert. Diese Gegenschwingungssignale sind so gewählt und bemessen, daß durch die erzeugten Gegenschwingungen die Original-Schwingungen kompensiert werden.

Der Erfindung liegt weiterhin die Aufgabe zugrunde, einen Modellträger für Windkanalmodelle zu schaffen, bei dem der Gegenschwingungserzeuger nur relativ geringe Schwingungsamplituden erzeugen muß.

Die Lösung dieser Aufgabe erfolgt erfindungsgemäß mit den im Patentanspruch 2 angegebenen Merkmalen.

Bei dem erfindungsgemäßen Modellträger ist der in Abhängigkeit von Schwingungsdeformierungen der Waage gesteuerte Gegenschwingungserzeuger in serieller Anordnung zu der Waage angebracht, und zwar entweder zwischen Stiel und Waage oder im Verlaufe des Stieles. Der Gegenschwingungserzeuger befindet sich also in jedem Fall in der Nähe der Waage, die ihrerseits das Modell trägt. Der Stiel bzw. der Hauptteil des Stieles ist starr befestigt und nicht den Schwingungen ausgesetzt. Die schwingende Masse besteht ganz oder im wesentlichen nur aus dem Modell und der Waage. Infolge dieser geringen Masse muß der Gegenschwingungserzeuger nur relativ geringe Schwingungsamplituden erzeugen. Der Gegenschwingungserzeuger wird in Abhängigkeit von den Signalen, die die Waage oder andere die Bewegung des Modells beschreibende Sensoren liefern, angeregt, um zu den auftretenden Schwingungen des Modells Gegenschwingungen zu erzeugen, so daß eine Schwingungskompensation erfolgt.

Die Erfindung eignet sich generell für alle Windkanäle, insbesondere aber für Windkanäle, in denen Flugzeugmodelle getestet werden. Auch in Windkanälen, die bei sehr niedrigen Temperaturen arbeiten (Cryowindkanäle), können die Gegenschwingungserzeuger aus Piezoelementen eingesetzt werden, da sie bei niedrigen Temperaturen funktionsfähig sind.

Im folgenden wird unter Bezugnahme auf die Zeichnungen ein Ausführungsbeispiel der Erfindung näher erläutert.

Es zeigen:
- Fig. 1: einen schematischen Längsschnitt durch ein an einem Modellträger befestigtes Flugzeugmodell,
- Fig. 2: eine vergrößerte Darstellung des Gegenschwingungserzeugers und
- Fig. 3: einen Schnitt entlang der Linie III-III von Fig. 2.

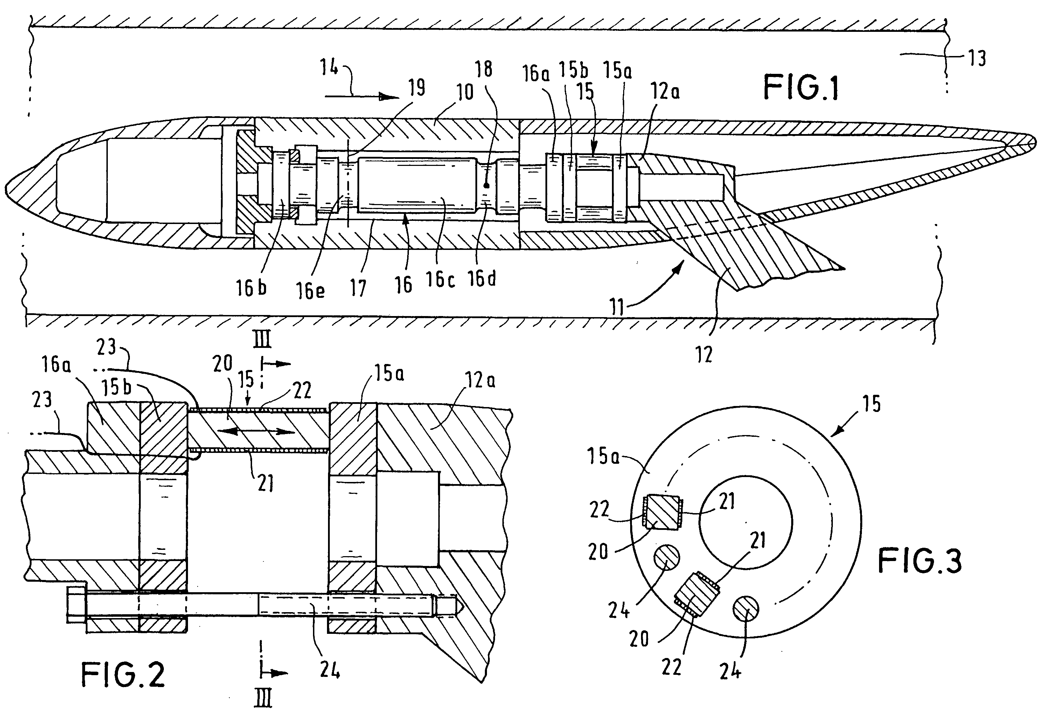

Gemäß Fig. 1 ist ein Windkanalmodell 10 in Form eines Flugzeugmodells vorgesehen, das an einem Modellträger 11 befestigt ist. Der Modellträger 11 weist einen Stiel 12 auf, der nach Art eines Auslegers in den Strömungskanal 13 hineinragt und in geeigneter Weise gehaltert ist. Nach Fig. 1 verläuft der Stiel 12 schräg zur Strömungsrichtung 14, jedoch kann er auch parallel zur Strömungsrichtung verlaufen. Das (nicht dargestellte) rückwärtige Ende des Stieles 12 ist an einem ortsfesten Widerlager befestigt, während das freie Ende 12a sich im Innern des Modells 10 befindet. Zu diesem Zweck weist das Modell eine Öffnung auf, durch die der Stiel 12 hindurchragt.

An dem Ende 12a des Stieles 12 ist das eine Ende 15a des Gegenschwingungserzeugers 15 befestigt. An dem anderen Ende 15b des Gegenschwingungserzeugers ist eine Waage 16 mit einem Halter 16a angebracht. An dem der Strömung entgegengerichteten Ende der Waage 16 befindet sich ein weiterer Halter 16b, an dem das Modell 10 befestigt ist. Die gesamte Waage 16 ist in einem Hohlraum 17 des Modells 10 untergebracht, der eine solche Weite hat, daß die Waage 16 sich in verschiedenen Richtungen verformen kann.

Die Waage 16 besteht aus einem Mittelteil 16c, der in Längsrichtung verformbar ist, sowie zwei Biegebereichen 16d und 16e, die Biegungen um eine horizontale Achse 18 und um eine vertikale Achse 19 zulassen. An den einzelnen Bereichen der Waage sind (nicht dargestellte) Dehnmeßstreifen angebracht, die die jeweiligen Verformungen dieser Bereiche messen und entsprechende Signale an eine Auswerteeinrichtung liefern, die die Belastungen ermittelt, die infolge der Strömung auf das Modell 10 einwirken. Die verschiedenen Elemente der Waage 16 sind elastisch. Daher bildet die Masse des Modells 10 zusammen mit der Waage 16 ein schwingfähiges Masse-Feder-System.

Der Gegenschwingungserzeuger 15 dient dazu, Gegenschwingungen zu erzeugen, durch die die Schwingungen des Modells 10 kompensiert werden.

Der Aufbau des Gegenschwingungserzeugers 15 ist schematisch in den Figuren 2 und 3 dargestellt. Die Enden 15a und 15b werden durch flanschartige Scheiben gebildet, zwischen denen stabförmige piezoelektrische Elemente 20 verlaufen. Jedes piezoelektrische Element 20 ist an gegenüberliegenden Seiten mit Elektroden 21,22 versehen, die mit elektrischen Leitungen 23 verbunden sind. Die piezoelektrischen Elemente bilden einen Käfig. Sie halten die Enden 15a und 15b auf Distanz, wobei sich zwischen den piezoelektrischen Elementen 20 Spannelemente 24 in Form von Schrauben erstrecken. Diese Spannelemente üben eine Vorspannung auf die piezoelektrischen Elemente 20 aus, die dadurch axial zusammengedrückt werden. An die Leitungen 23 eines jeden piezoelektrischen Elements 20 kann eine Steuerspannung für dieses Element 20 gelegt werden. Auf diese Weise ist es möglich, die Elemente 20 des Gegenschwingungserzeugers separat anzusteuern und dadurch unterschiedliche Schwingungsmoden zu erzeugen. So können beispielsweise einander gegenüberliegende Elemente 20 gegenphasig zueinander erregt werden, um Drehschwingungen zu erzeugen. Wenn sämtliche Elemente 20 gleichphasig erregt werden, werden Längsschwingungen erzeugt.

Die Erregerspannungen für die piezoelektrischen Elemente 20 werden von einer Steuereinrichtung erzeugt, die die Signale der Waage 16 oder anderer die Bewegungen des Modells beschreibender Sensoren empfängt und nach festgelegten Umrechnungskriterien daraus Gegenschwingungssignale für den Gegenschwingungserzeuger 15 produziert.

## Patentansprüche

1. Modellträger für Windkanalmodelle (10), mit einem Stiel (12), der eine elastische Waage (16) zum Ermitteln von auf das Modell (10) einwirkenden Kräften in mehreren Freiheitsgraden trägt, und einen in serieller Anordnung zu der Waage (16) vorgesehenen Gegenschwingungserzeuger (15), der in Abhängigkeit von Signalen gesteuert ist, welche von die Bewegungen des Modells meldenden Sensoren geliefert werden,
**dadurch gekennzeichnet,**
daß der Gegenschwingungserzeuger (15) mehrere um eine Achse verteilt angeordnete piezoelektrische Elemente (20) aufweist, die in Längsrichtung durch mechanischen Druck vorgespannt sind, und jeweils eine angelegte Spannung in eine Bewegung umsetzen.

2. Modellträger für Windkanalmodelle (10), mit einem Stiel (12), der eine elastische Waage (16) zum Ermitteln von auf das Modell (10) einwirkenden Kräften in mehreren Freiheitsgraden trägt, und einem in serieller Anordnung zu der Waage (16) vorgesehenen Gegenschwingungserzeuger (15), der in Abhängigkeit von Signalen gesteuert ist, welche von die Bewegungen des Modells meldenden Sensoren geliefert werden,
**dadurch gekennzeichnet,**
daß der Gegenschwingungserzeuger (15) zwischen Stiel (12) und Waage (16) oder im Verlaufe des Stieles (12) angeordnet ist.

## Claims

1. A model support for wind tunnel models (10), comprising a holding arm (12) carrying an elastic balance (16) for detecting, in a plurality of degrees of freedom, forces acting on the model (10), and a counteroscillation generator (15) provided in serial arrangement with the balance (16) and being controlled on the basis of signals supplied by sensors signaling the movements of the model (10),
**characterized in**
that the counteroscillation generator (15) comprises a plurality of piezoelectric elements (20) distributed about an axis and biased in longitudinal direction by mechanical pressure, each of the piezoelectric elements (20) converting an applied tension into a movement.

2. A model support for wind tunnel models (10), comprising a holding arm (12) carrying an elastic balance (16) for detecting, in a plurality of degrees of freedom, forces acting on the model (10), and a counteroscillation generator (15) provided in serial arrangement with the balance (16) and being controlled on the basis of signals supplied by sensors signaling the movements of the model (10),
**characterized in**
that the counteroscillation generator (15) is arranged between the holding arm (12) and the balance (16) or along the holding arm (12).

## Revendications

1. Porte-modèle pour modèles de soufflerie (10), comportant un bras-support (12), qui porte un niveau (16) élastique servant à la détermination des forces exercées sur le modèle (10) selon plusieurs degrés de liberté, et un générateur de contre-oscillations (15), prévu selon un montage en série par rapport au niveau (16) et qui est commandé en fonction de signaux, qui sont fournis par des capteurs, détectant les mouvements du modèle,
caractérisé en ce que le générateur de contre-oscillations (15) présente plusieurs éléments piézoélectriques (20), qui sont régulièrement répartis autour d'un axe et qui sont soumis à une prétension dans le sens longitudinal par une pression mécanique, et qui transforment chaque fois une tension appliquée en un mouvement.

2. Porte-modèle pour modèles de soufflerie (10), comportant un bras-support (12), qui porte un niveau (16) élastique servant à la détermination des forces exercées sur le modèle (10) selon plusieurs degrés de liberté, et un générateur de contre-oscillations (15), prévu selon un montage en série par rapport au niveau (16) et qui est commandé en fonction de signaux, qui sont fournis par des capteurs, détectant les mouvements du modèle,
caractérisé en ce que le générateur de contre-oscillations (15) est placé entre le bras-support (12) et le niveau (16) ou bien sur l'étendue du bras-support (12).
